# NEUE EUROPÄISCHE PATENTSCHRIFT

(11) **EP 2 133 289 B2**
(45) Veröffentlichungstag und Bekanntmachung des Hinweises auf die Entscheidung über den Einspruch: **25.03.2026**
(45) Hinweis auf die Patenterteilung: 07.05.2014
(21) Anmeldenummer: 09007605.0
(22) Anmeldetag: 09.06.2009
(51) Int. Cl.: B65G 1/00

(54) **Vorrichtung zum Ein- und Auslagern von Gütern und zur Reinigung des Lagers, und Verfahren zum Betrieb einer solchen Vorrichtung**
Device for stocking and removing goods and for cleaning the store, and method for operating such a device
Dispositif de chargement et de déchargement de marchandises et de nettoyage du magasin, et procédé de fonctionnement d'un tel dispositif

(30) Priorität: 09.06.2008 DE 102008027376
(43) Veröffentlichungstag der Anmeldung: 16.12.2009
(73) Patentinhaber: KNAPP Smart Solutions GmbH, 45899 Gelsenkirchen (DE)
(72) Erfinder: Gessner, Jürgen, 42781 Haan (DE)
(74) Vertreter: Schwarz & Partner Patentanwälte GmbH

(56) Entgegenhaltungen:
- WO-A1-2008/061951
- DE-A1- 10 125 287
- DE-A1- 4 317 144
- JP-A- 2003 054 734
- JP-A- 2007 168 968
- JP-U- H0 661 814

## Beschreibung

Die Erfindung betrifft eine Vorrichtung zum Ein- und Auslagern von Gütern, insbesondere von Arzneimittelverpackungen, sowie ein Verfahren zum Betrieb einer solchen Vorrichtung.

Eine Vorrichtung zur automatischen unsortierten Lagerung von kleinteiligen, quaderförmigen Packungen wie Arzneimittelpackungen ist in der DE 10 2004 013 353 offenbart. Diese Vorrichtung weist eine bereitstellende Aufgabestation in der Form eines Endlosförderers auf, der außerhalb des Lagers verläuft und die einzulagernden Gegenstände von dieser Aufgabestation mittels einer Transfereinheit in den Arbeitsbereich mindestens eines Regalbediengerätes führt und auf Tablaren plaziert, die einen Puffer bilden. Die neu einzulagernden Gegenstände werden vor der Plazierung auf dem Puffertablar mittels Barcode-Scanner oder sonstiger Sensorik, wie z.B. Kameras identifiziert und hinsichtlich ihrer Abmessungen vermessen, so daß ein geeigneter Lagerplatz von einer Rechnersteuerung der Lagervorrichtung gefunden werden kann. Sowohl die Identifizierung als auch die Vermessung der Gegenstände kann in an sich bekannter Weise vollständig maschinell ausgeführt werden. Zur Verminderung des Anlagenaufwandes ist es jedoch vielfach üblich, die Identifizierung im Rahmen eines Handhabungsvorganges von einer Bedienperson vornehmen zu lassen, die den Barcode des Gegenstandes an einem entsprechenden Lesegerät vorbeiführt und dann den Gegenstand auf dem Endlosförderer auflegt. Noch während des nacheinander und mit Abstand Auflegens der einzulagernden Ware, wird diese durch den Förderer der Transfereinheit zugeführt, die die Artikel auf den Tablaren für die spätere Übernahme durch das Regalbediengerät ablegt. Von diesen Tablaren nimmt das Regalbediengerät die Artikel auf und plaziert sie an dem durch den Rechner vorgesehenen freien Lagerplatz auf einem der Regalböden, die übereinander angeordnet das Regal bilden. Die Positionen der Artikel, die auf den Tablaren liegen, sind der Rechnersteuerung bekannt, so daß das Regalbediengerät gezielt darauf zugreifen kann.

Derartige Vorrichtungen zur automatisierten Ein- und Auslagerung von Gütern, die auch Kommissioniervorrichtungen genannt werden, haben sich insbesondere aufgrund der Geschwindigkeit, mit der diese ein Ein- und Auslagern von Gütern ermöglichen und zudem aufgrund des guten Verhältnisses von Lagerraum zu lagerbarem Gütervolumen bewährt.

Als problematisch hat sich dabei jedoch herausgestellt, daß die Lager im Laufe der Zeit durch Staub, der sich in der Umgebungsluft oder auf den einzulagernden Gütern befindet, sowie durch Mikroabrieb an den Gütern verschmutzen.

Eine Reinigung erfolgt bei den bekannten Kommissioniervorrichtungen auf manuelle Weise, wobei die Vorrichtungen aus Sicherheitsgründen zumindest teilweise stillgelegt werden müssen, um eine Gefährdung der Reinigungspersonen durch die automatisierte Vorrichtung auszuschließen. Da viele solcher Vorrichtungen zudem mit Hochregallagern versehen sind, benötigen die Reinigungspersonen häufig Leitern oder Bühnen, um auch die oberen Regalböden erreichen zu können. Ab einer gewissen Höhe müssen dann Absturzsicherungen von den Reinigungspersonen getragen werden. Die Reinigung von solchen beschriebenen Kommissioniervorrichtungen ist gegenwärtig somit mit einem erheblichen Zeit- und Arbeitsaufwand verbunden. Neben der Tatsache, daß für die gesamte Dauer der Reinigung das Gerät ausgeschaltet bleiben muß und auch kein Teilbetrieb eines Teillagers aus Sicherheitsgründen möglich ist und nicht sichergestellt ist, daß das Reinigungspersonal auch über ausreichende Kenntnis über das Wiederanfahren der Anlage verfügt, besteht darüber hinaus insbesondere bei leichten Gütern, wie beispielsweise Arzneimittelpackungen, die Gefahr, daß die Reinigungspersonen die Güter verschieben und das Regalbediengerät die Güter, deren Soll-Positionen in der Steuerung der Vorrichtung gespeichert sind, nicht mehr auffinden oder - aufgrund der Verschiebung - ein sicheres Greifen der Güter mit der vorgesehenen Greifervorrichtung nicht mehr erfolgen kann. Es kommt zudem vor, daß in das Lager mitgenommene Steighilfen, wie z.B. "Elefantenfüße" oder kleine Trittleitern vergessen werden und nach Wiederinbetriebnahme zu enormen Schäden am Gerät führen.

Die JP 2007 168 968 A offenbart ein Hochregal mit einem Regalbedienungsgerät, über das große Lagerboxen in einzelnen Stellplätzen des Hochregals abgelegt werden können. In einem der Regallager ist eine Reinigungsvorrichtung vorgesehen, die dazu dient, die Lagerflächen, auf denen die Lagerboxen abgelegt werden, zu reinigen. Die von dem Regalbedienungsgerät auf eine Lagerfläche abgesetzte Reinigungsvorrichtung führt die Reinigung selbsttätig durch.

Die WO 2008/061951 A offenbart eine Kommissioniervorrichtung mit mehreren Regalreihen sowie mehreren, jeweils zwischen zwei Regalreihen verfahrbaren Kommissionierrobotern, die dazu vorgesehen sind, in Kisten gelagerte Güter in die Regale ein- bzw. auszulagern. Die Kommissionierroboter sind mit einer Reinigungsvorrichtung versehen, die aus einer Düsenanordnung und zwei rotierenden Bürsten besteht. Mittels der Reinigungsvorrichtung können die Lagerplätze in den Regalreihen gereinigt werden, sofern darin keine Kisten gelagert sind. Der Kommissionierroboter kann fest mit der Reinigungsvorrichtung verbunden sein.

Die JP H06 61814 U offenbart eine Vorrichtung zum Ein- und Auslagern von Gütem, mit mindestens einem Bereitstellungsplatz, auf dem die Güter bereitgestellt werden können. Es ist ein Regal mit Lagerplätzen zur Lagerung der Güter und ein Regalbediengerät zum Anfahren eines Bereitstellungsplatzes und der Lagerplätze vorgesehen. Ein Reinigungsmittel kann aufgenommen und freien Lagerplätzen zugeführt werden, um diese zu reinigen. Die Reinigungsbewegungen werden von dem die Reinigungsmittel aufnehmenden Regalbediengerät durchgeführt.

Ausgehend von diesem Stand der Technik liegt der Erfindung daher die Aufgabe zugrunde, eine gattungsgemäße Vorrichtung so weiterzuentwickeln, daß diese wirtschaftlicher betrieben werden kann.

Diese Aufgabe wird durch die Gegenstände der unabhängigen Patentansprüche gelöst. Vorteilhafte Ausführungsformen sind Gegenstand der jeweiligen abhängigen Patentansprüche.

Bei der erfindungsgemäß vorgesehenen Vorrichtung kann eine Reinigung der Lagervorrichtung erfolgen, ohne daß eine zumindest teilweise Stillegung der Vorrichtung erforderlich wäre. Da zudem keine manuelle Reinigung der Vorrichtung mehr erfolgen muß, kann eine solche erfindungsgemäße Vorrichtung wirtschaftlicher betrieben werden.

Unter "Bereitstellungsplatz" wird erfindungsgemäß eine Ablagestelle verstanden, an der die Güter für eine Aufnahme durch das Regalbediengerät abgelegt werden. Hierbei kann es sich um eine Ablagestelle handeln, an der die Güter manuell von einer Bedienperson abgelegt werden. Beispielsweise kann es sich jedoch auch um eine Übergabeposition handeln, an der die Güter von einer automatisierten Transportvorrichtung an das Regalbediengerät übergeben werden.

Erfindungsgemäß werden nicht nur Hochregale erfaßt, die eine Mehrzahl von übereinander angeordneten Regalböden mit Lagerplätzen aufweisen, sondern auch solche Ablagesysteme mit lediglich einer Ablageebene oder Schubladensysteme.

Die Aufnahmevorrichtung der erfindungsgemäßen Vorrichtung ist als Greifvorrichtung zum Klemmgreifen der Güter ausgebildet. Eine solche Ausgestaltung der Aufnahmevorrichtung kann besonders flexibel hinsichtlich unterschiedlicher Geometrien der ein- und auszulagernden Güter sein. Bei der als Greifvorrichtung ausgebildeten Aufnahmevorrichtung ist vorgesehen, das Reinigungsmittel mittels dieser zu fixieren und von dieser die Reinigungsbewegungen durchführen zu lassen.

Das Reinigungsmittel kann einen Barcode erhalten, der es als Sonderteil identifiziert. Es kann wie die Güter gescannt und auf das Band gelegt werden oder in das Einlagerregal gelegt werden. Die Greifvorrichtung holt es dann dort und lagert es an einen freien Platz. Soll gereinigt werden, holt das Gerät das Reinigungsmittel und legt es auf einen freien Platz.

Vorzugsweise ist das Reinigungsmittel als elektrostatisches Staubtuch ausgebildet. Derartige Staubtücher sind aus dem Stand der Technik hinreichend bekannt. Hierbei handelt es sich um trockene oder mit einer Reinigungsflüssigkeit benetzte Tücher, die - wenn sie über die zu reinigende Oberfläche gerieben werden - elektrostatisch geladen werden, wodurch Staub angezogen wird.

Vorzugsweise weist die Steuerung der Vorrichtung dem Reinigungsprozeß eine niedrigere Priorität als dem Ein- und Auslagern der Güter zu.

Dies kann besonders bevorzugt dadurch erfolgen, daß eine Reinigung hauptsächlich oder nur dann durchgeführt wird, wenn kein Ein- oder Auslagern von Gütern durchgeführt wird. Dadurch kann verhindert werden, daß der Betrieb der Vorrichtung durch den Reinigungsprozeß negativ beeinflußt wird.

Weiterhin kann vorsehen sein, daß eine Reinigung bei einem erforderlichen Ein- oder Auslagern unterbrochen wird. In diesem Fall kann das von der Aufnahmevorrichtung fixiertes Reinigungsmittel an einer beliebigen oder definierten Position abgelegt werden, wobei diese Position in der Steuerung gespeichert werden kann. Ist der Ein- beziehungsweise Auslagerungsvorgang abgeschlossen, kann der Reinigungsprozeß wieder aufgenommen werden, wobei das Reinigungsmittel von der Aufnahmevorrichtung an der in der Steuerung gespeicherten Ablagestelle wieder aufgenommen werden kann.

Vorzugsweise kann vorgesehen sein, daß ein zur Reinigung vorgesehener Bereich des Regals vor der Reinigung mittels des Regalbediengeräts frei geräumt wird.

Dies kann beispielsweise dadurch erfolgen, daß durch die Steuerung ein Abschnitt des Regals aufgrund einer Sperrung für eine Einlagerung von Gütern und/oder aufgrund einer bevorzugten Auslagerung in diesem Abschnitt des Regals für eine nachfolgende Reinigung geleert wird. Auf diese Weise wird der vorgesehene Abschnitt des Regals von dem Regalbediengerät in passiver Weise geleert, wobei kein ausschließlich dem Reinigungsprozeß dienender Betrieb des Regalbediengeräts erforderlich ist. Eine solche Steuerung kann insbesondere dann vorteilhaft eingesetzt werden, wenn die Vorrichtung ein hohes Ein- und Auslagerungsaufkommen und dadurch bedingt keine oder lediglich geringe Stillstandszeiten der Regalbediengeräts hat.

Ein Freiräumen eines Abschnitts des Regals von den Gütern kann weiterhin durch ein aktives Umlagern der Güter mittels des Regalbediengeräts erfolgen. Ein solches Umlagern der Güter für einen nachfolgenden Reinigungsprozeß kann insbesondere dann zum Einsatz kommen, wenn die Vorrichtung längere Stillstandszeiten für das Ein- und Auslagern der Güter hat, beziehungsweise wenn eine Reinigung des vorgesehenen Abschnitts kurzfristig erfolgen muß, so daß für ein passives Leeren gemäß der vorab beschriebenen Alternative kein ausreichender Zeitraum zur Verfügung steht.

Vorteilhafterweise kann bei der Umlagerung gleichzeitig eine Neusortierung der Güter erfolgen, so daß beispielsweise die Aufnahmekapazität des Regals durch eine Gruppierung von Gütern mit gleichen oder ähnlichen Verpackungsgrößen gesteigert werden kann.

Der frei geräumte Abschnitt des Regals kann nach dem Reinigen und einer gegebenenfalls vorgesehenen Wartezeit, die beispielsweise dem Trocknen der gereinigten Flächen dienen kann, von der Steuerung wieder frei gegeben werden, so daß in diesem Abschnitt wieder ein Einlagern von Gütern erfolgen kann.

Vorteilhafterweise kann das gesamte Regal der Vorrichtung sukzessive gereinigt werden, indem nacheinander alle Abschnitte des Regals frei geräumt, gereinigt und wieder frei gegeben werden.

Ein Räumen bzw. Umlagern kann auch zur Inventur genutzt werden. Beim Entfernen der Artikel vom Regalboden können die Artikel erfaßt werden, z.B. durch Lesen der Identifikation (z.B. RFID) oder mittels eines Plausibilitätschecks über die Größe. So kann die Länge, z.B. beim Aufziehen durch eine Lichtschranke, Ultraschallsensor etc. gemessen werden und mit den Artikelmaßen verglichen werden. Auch ist ein Abgleich mit Kamerabildern möglich.

In einer weiterhin bevorzugten Ausführungsform der vorliegenden Erfindung kann vorgesehen sein, das Reinigungsmittel der Reinigungsvorrichtung in definierten Intervallen, die durch Zählen und Speichern der Reinigungsvorgänge bestimmt werden können, für eine Wartung oder einen Austausch mittels der Greifvorrichtung an dem Bereitstellungsplatz abzulegen oder durch bereits eingelagerte weitere Reinigungsmittel ersetzt zu werden, um jegliche Unterbrechungen zu vermeiden. Das Reinigungsmittel kann dann beispielsweise von einer Bedienperson ausgetauscht werden.

Ein erfindungsgemäßes Verfahren ist dadurch gekennzeichnet, dass bei einer gattungsgemäßen Vorrichtung eine Reinigung dann durchgeführt wird, wenn kein Ein- oder Auslagern von Gütern erfolgt.

Die Erfindung wird nachfolgend anhand eines in den Zeichnungen dargestellten Ausführungsbeispiels näher erläutert.

In den Zeichnungen zeigt:

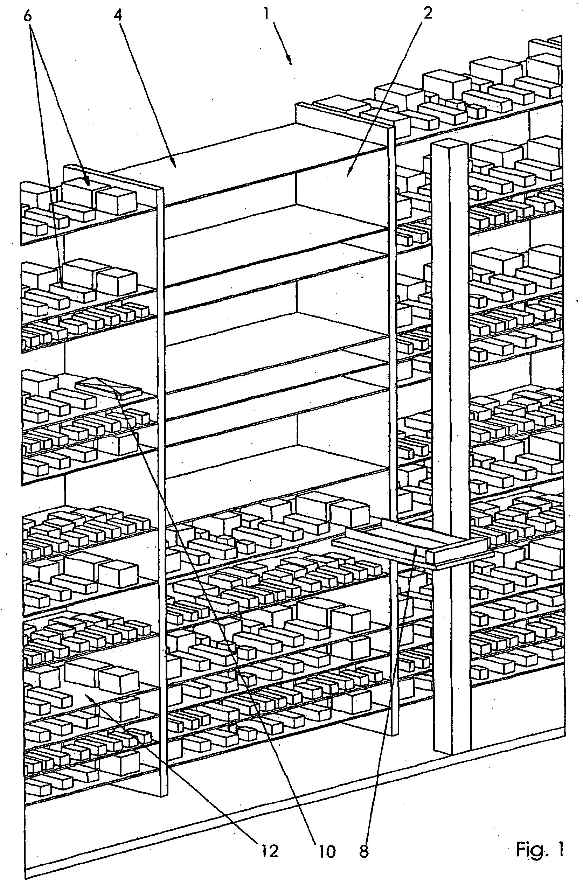

- Fig. 1: eine Kommissioniervorrichtung mit einem Regalbediengerät und einem Reinigungsmittel;

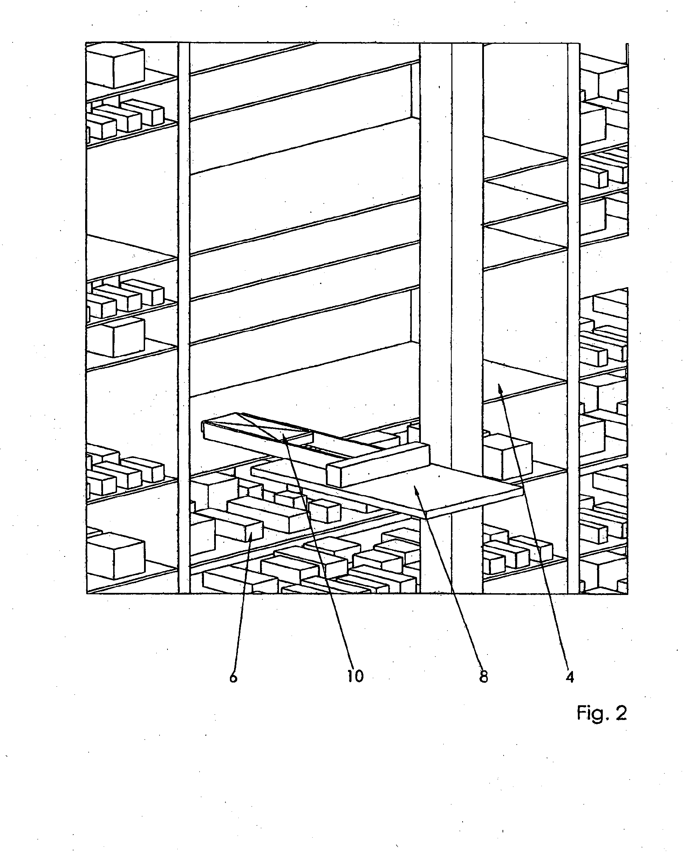

- Fig. 2: eine Detailansicht des Regalbediengerätes mit Reinigungsmittel.

Eine Kommissioniervorrichtung 1 weist mehrere Regale 2 mit Lagerplätzen 4 auf. In den Lagerplätzen befinden sich Güter 6 (wie beispielsweise Arzneimittelpackungen). Diese Güter 6 werden von einem Regalbediengerät 8 in die Lagerplätze ein- und ausgelagert. Ein Reinigungsmittel 10 liegt dabei für das Regelbediengerät erreichbar, wie die Güter 6 an einem Lagerplatz 4.

Zur Reinigung der Lagerplätze 4 wird das Reinigungsmittel 10 durch das Regalbediengerät 8 aufgenommen und freien Lagerplätzen 12 zugeführt, um diese zu reinigen. Alternativ wird ein gesamter Fachboden dadurch gereinigt, daß dieser durch das Regalbediengerät 8 zunächst von den Gütern 6 durch Umlagerung auf einen freien, gegebenenfalls bereits gereinigten Fachboden, freigeräumt wird, um dann den freigeräumten Fachboden mit dem Reinigungsmittel 10 reinigen zu können.

Das Reinigungsmittel 10, das als Schwamm oder Reinigungsblock ausgebildet sein kann, ist in der Kommissioniervorrichtung 1 wie die Güter 6 bezüglich seiner Positionierung zusammen mit der Sonderinformation gespeichert, daß es sich um ein Reinigungsmittel handelt.

## Patentansprüche

1. Vorrichtung (1) zum Ein- und Auslagern von Gütern (6), insbesondere von Arzneimittelpackungen, mit mindestens einem Bereitstellungsplatz, auf dem die Güter (6) bereitgestellt werden, mit mindestens einem Regal (2) mit Lagerplätzen (4) zur Lagerung der Güter (6), mit einem Reinigungsmittel (10) zur Reinigung der Vorrichtung (1), insbesondere des Regals (2), mit mindestens einem Regalbediengerät (8) zum Anfahren des Bereitstellungsplatzes und der Lagerplätze (4), wobei das Regalbediengerät (8) mindestens eine Aufnahmevorrichtung zur Aufnahme eines oder mehrerer der Güter (6) aufweist, und mit einer Steuerung, wobei die Aufnahmevorrichtung als Greifvorrichtung zum Klemmgreifen der Güter (6) ausgebildet ist und wobei die Steuerung zur automatisierten Reinigung der Vorrichtung (1) eingestellt ist, wobei das Reinigungsmittel (10) von der Greifvorrichtung klemmgegriffen wird, das Regalbediengerät (8) einem Bereich der Vorrichtung (1) zugeführt wird, um den Bereich der Vorrichtung (1) zu reinigen, und die Reinigungsbewegungen von der Greifvorrichtung durchgeführt werden, wobei beim Durchführen der Reinigungsbewegungen das Reinigungsmittel (10) mittels der Greifvorrichtung fixiert wird.

2. Vorrichtung gemäss Anspruch 1, **dadurch gekennzeichnet, dass** das Reinigungsmittel (10) als elektrostatisches Staubtuch ausgebildet ist.

3. Vorrichtung gemäss einem der vorhergehenden Ansprüche, **dadurch gekennzeichnet, dass** die Steuerung derart eingestellt ist, dass der Reinigung eine niedrigere Priorität zugeordnet ist als dem Ein- und Auslagern der Güter (6).

4. Vorrichtung gemäss einem der vorhergehenden Ansprüche, **dadurch gekennzeichnet, dass** die Steuerung derart eingestellt ist, dass das Reinigungsmittel (10) an einer beliebigen oder definierten Position abgelegt wird, wobei diese Position in der Steuerung gespeichert wird.

5. Vorrichtung gemäss einem der vorhergehenden Ansprüche, **dadurch gekennzeichnet, dass** die Steuerung derart eingestellt ist, dass das Reinigungsmittel (10) beim Einlagern wie die Güter (6) gescannt und eingelagert wird und dabei mit der Information gespeichert wird, dass es sich um das Reinigungsmittel (10) handelt.

6. Vorrichtung gemäss einem der vorhergehenden Ansprüche, **dadurch gekennzeichnet, dass** die Steuerung derart eingestellt ist, dass ein zur Reinigung vorgesehener Abschnitt des Regals (2) vor der Reinigung mittels des Regalbediengeräts (8) frei geräumt wird.

7. Vorrichtung gemäss Anspruch 6, **dadurch gekennzeichnet, dass** die Steuerung derart eingestellt ist, dass der Abschnitt des Regals (2) aufgrund einer bevorzugten Auslagerung von Gütern (6) in diesem Abschnitt für die nachfolgende Reinigung geleert wird.

8. Vorrichtung gemäss Anspruch 6, **dadurch gekennzeichnet, dass** die Steuerung derart eingestellt ist, dass die in diesem Abschnitt gelagerten Güter (6) umgelagert werden.

9. Vorrichtung gemäss Anspruch 8, **dadurch gekennzeichnet, dass** die Steuerung derart eingestellt ist, dass bei der Umlagerung eine Neusortierung und/oder Inventur der Güter (6) erfolgt.

10. Vorrichtung gemäss Anspruch 7 oder 8, **dadurch gekennzeichnet, dass** die Steuerung derart eingestellt ist, dass sukzessive verschiedene Abschnitte des Regals (2) gereinigt werden.

11. Vorrichtung gemäss einem der vorhergehenden Ansprüche, **dadurch gekennzeichnet, dass** die Steuerung derart eingestellt ist, dass das Reinigungsmittel (10) in definierten Intervallen für eine Wartung oder einen Austausch mittels der Greifvorrichtung an dem Bereitstellungsplatz abgelegt oder durch weitere eingelagerte Reinigungsmittel ersetzt wird.

12. Vorrichtung gemäss Anspruch 11, **dadurch gekennzeichnet, dass** die Steuerung derart eingestellt ist, dass die Reinigungsvorgänge gezählt werden und dass die Intervalle nach der Zahl der Reinigungsvorgänge bestimmt werden.

13. Verfahren zum Betrieb einer Vorrichtung (1) gemäss einem der vorhergehenden Ansprüche, wobei die Reinigung durchgeführt wird, wenn kein Ein- oder Auslagern von Gütern erfolgt.

## Claims

1. Apparatus (1) for storage and removal of items (6), in particular medicament packages, with at least one preparation place on which the items (6) are prepared, with at least one shelf (2) with storage places (4) for storing the items (6), with a cleaning means (10) for cleaning the apparatus (1), in particular the shelf (2), with at least one shelf operating device (8) for moving to the preparation place and the storage places (4), wherein the shelf operating device (8) comprises at least one receiving device for receiving one or more of the items (6), and with a control, wherein the receiving device is designed as a gripping device for taking hold of the items (6) and wherein the control is adjusted for the automated cleaning of the device (1), wherein the cleaning means (10) is held tight by the gripping device, the shelf operating device (8) is guided to a region of the apparatus (1), so as to clean the region of the apparatus (1), and the cleaning movements are executed by the gripping device, wherein the cleaning means (10) is fixed by means of the gripping device when performing the cleaning movements..

2. Apparatus according to claim 1, **characterised in that** the cleaning means (10) is formed as an electrostatic dust cloth.

3. Apparatus according to one of the preceding claims, **characterised in that** the control is adjusted so that a lower priority is allocated to the cleaning than to the storage and removal of the items (6).

4. Apparatus according to one of the preceding claims, **characterised in that** the control is adjusted so that the cleaning means (10) is deposited at an arbitrary or defined position, this position being stored in the control.

5. Apparatus according to one of the preceding claims, **characterised in that** the control is adjusted so that the cleaning means (10) is during storage scanned and stored like the items (6) and thereby is stored with the information that it is the cleaning means (10).

6. Apparatus according to one of the preceding claims, **characterised in that** the control is adjusted so that a section of the shelf (2) intended for the cleaning is vacated by means of the shelf operating device (8) before the cleaning.

7. Apparatus according to claim 6, **characterised in that** the control is adjusted so that the section of the shelf (2) is emptied on the basis of a preferred removal of items (6) in this section for subsequent cleaning.

8. Apparatus according to claim 6, **characterised in that** the control is adjusted so that the items (6) stored in this section are rearranged.

9. Apparatus according to claim 8, **characterised in that** the control is adjusted so that a new sorting and/or inventory of the items (6) is performed in the rearrangement.

10. Apparatus according to claim 7 or 8, **characterised in that** the control is adjusted so that successive different sections of the shelf (2) are cleaned.

11. Apparatus according to one of the preceding claims, **characterised in that** the control is adjusted so that the cleaning means (10) is removed at defined intervals for maintenance or an exchange by means of the gripping device at the preparation place, or is replaced by further stored cleaning means.

12. Apparatus according to claim 11, **characterised in that** the control is adjusted so that the cleaning procedures are counted and that the intervals are determined according to the number of cleaning procedures.

13. Method for operating an apparatus (1) according to one of the preceding claims, wherein the cleaning is carried out when no storage or removal of items takes place.

## Revendications

1. Dispositif (1) pour emmagasiner et déstocker des marchandises (6), en particulier des emballages de médicaments, avec au moins un emplacement de mise à disposition sur lequel les marchandises (6) sont mises à disposition, avec au moins un rayonnage (2) doté d'emplacements de stockage (4) pour le stockage des marchandises (6), avec un moyen de nettoyage (10) pour nettoyer le dispositif (1), en particulier le rayonnage (2), avec au moins un appareil de desserte de rayonnages (8) pour atteindre l'emplacement de mise à disposition et les emplacements de stockage (4), sachant que l'appareil de desserte de rayonnages (8) présente au moins un dispositif de réception pour recevoir une ou plusieurs des marchandises (6), et avec une unité de commande, dans lequel le dispositif de réception est réalisé sous forme de dispositif de préhension pour saisir par serrage les marchandises (6) et dans lequel l'unité de commande est réglée pour le nettoyage automatisé du dispositif (1), sachant que le moyen de nettoyage (10) est saisi par serrage par le dispositif de préhension, que l'appareil de desserte de rayonnages (8) est acheminé vers une région du dispositif (1) pour nettoyer la région du dispositif (1), et que les mouvements de nettoyage sont effectués par le dispositif de préhension, dans lequel le moyen de nettoyage (10) étant fixé à l'aide du dispositif de préhension pendant l'exécution des mouvements de nettoyage.

2. Dispositif selon la revendication 1, **caractérisé en ce que** le moyen de nettoyage (10) est réalisé sous forme de chiffon de dépoussiérage électrostatique.

3. Dispositif selon l'une des revendications précédentes, **caractérisé en ce que** l'unité de commande est réglée de telle sorte que le nettoyage est affecté d'une moins grande priorité que l'emmagasinage et le déstockage des marchandises (6).

4. Dispositif selon l'une des revendications précédentes, **caractérisé en ce que** l'unité de commande est réglée de telle sorte que le moyen de nettoyage (10) est déposé à un emplacement quelconque ou défini, sachant que cet emplacement est mémorisé dans l'unité de commande.

5. Dispositif selon l'une des revendications précédentes, **caractérisé en ce que** l'unité de commande est réglée de telle sorte que le moyen de nettoyage (10) est, lors de l'emmagasinage, scanné et emmagasiné comme les marchandises (6), en étant alors enregistré avec l'information qu'il s'agit du moyen de nettoyage (10).

6. Dispositif selon l'une des revendications précédentes, **caractérisé en ce que** l'unité de commande est réglée de telle sorte qu'une partie du rayonnage (2) que l'on prévoit de nettoyer est, avant le nettoyage, vidée au moyen de l'appareil de desserte de rayonnages (8).

7. Dispositif selon la revendication 6, **caractérisé en ce que** l'unité de commande est réglée de telle sorte que la partie du rayonnage (2) est vidée sur la base d'un déstockage préférentiel des marchandises (6) de cette partie en vue du nettoyage consécutif.

8. Dispositif selon la revendication 6, **caractérisé en ce que** l'unité de commande est réglée de telle sorte que les marchandises (6) stockées dans cette partie sont stockées ailleurs.

9. Dispositif selon la revendication 8, **caractérisé en ce que** l'unité de commande est réglée de telle sorte que, lors du stockage des marchandises ailleurs, on effectue un reclassement et/ou un inventaire des marchandises (6).

10. Dispositif selon la revendication 7 ou 8, **caractérisé en ce que** l'unité de commande est réglée de telle sorte que différentes parties successives du rayonnage (2) sont nettoyées.

11. Dispositif selon l'une des revendications précédentes, **caractérisé en ce que** l'unité de commande est réglée de telle sorte que le moyen de nettoyage (10), à intervalles définis, est déposé au moyen du dispositif de préhension à l'emplacement de mise à disposition pour un entretien ou un échange, ou est remplacé par d'autres moyens de nettoyage emmagasinés.

12. Dispositif selon la revendication 11, **caractérisé en ce que** l'unité de commande est réglée de telle sorte que les opérations de nettoyage sont comptées, et que les intervalles sont déterminés d'après le nombre d'opérations de nettoyage.

13. Procédé d'exploitation d'un dispositif (1) selon l'une des revendications précédentes, sachant que le nettoyage est effectué lorsqu'il n'y a pas d'emmagasinage ou de déstockage de marchandises.
